# EUROPEAN PATENT APPLICATION

(11) **EP 4 570 475 A1**
(43) Date of publication of application: **18.06.2025**
(21) Application number: 24215991.1
(22) Date of filing: 28.11.2024
(51) Int. Cl.: B29C 51/06, B29C 51/08, B29C 51/10, B29C 51/14, B29C 51/16, B31B 50/62, B65D 25/14, B31B 50/64, B31D 5/02, B31B 110/10, B31B 120/00, B31B 120/40, B29C 51/26, B65D 5/20, B65D 5/42, B65D 5/56, B31B 110/30

(54) **METHOD AND APPARATUS FOR MAKING AN OUTER SKELETON OF A CONTAINER**

(30) Priority: 11.12.2023 IT 202300026337; 11.12.2023 IT 202300026328; 04.11.2024 IT 202400024714; 04.11.2024 IT 202400024708
(71) Applicant: G. Mondini SpA, 25033 Cologne (BS) (IT)
(72) Inventor: MONDINI, Paolo Carlo, 25033 Cologne (BS) (IT); PADERNI, Daniel, 25045 CASTEGNATO BS (IT)
(74) Representative: Ponchiroli, Simone

(57) **Abstract**

Method and apparatus for making an outer skeleton (3) for a container (25), wherein the outer skeleton (3) comprises a bottom wall (5), and a lateral wall (6), and wherein the lateral wall (6) has at least one pair of superposed panels between which a heat-activatable glue (30) is present. The method comprises inserting a pressing element (15) inside the outer skeleton (3), the pressing element (15) being configured to expand and to thereby press on the at least one pair of superposed panels and to cause activation of the heat-activatable glue (30) and a consequent adhesive coupling between the pair of panels thanks to the heat supplied by the pressing element (15) or by a supporting element (23) coupled to it. The apparatus comprises the pressing element (15) and the supporting element (23) configured to operate in this way.

## Description

This invention relates to a method and an apparatus for making an outer skeleton of a container. In particular, this invention can be applied either if the end container comprises the outer skeleton (for example when a thermoformable film adheres to at least an inner surface of the outer skeleton), or if the container is constituted of the outer skeleton.

The containers to whose making this invention relates are containers which overall have the shape of a tray or of a tub with a bottom wall, a lateral wall and, preferably, an upper flange, and in which the outer skeleton constitutes the structural part whilst the plastic inner coating, if present, gives impermeability and, if necessary, acts as a barrier to oxygen. Hereinafter, for a simple and complete explanation, reference will be made almost exclusively to containers which comprise both the outer skeleton, and the plastic inner coating. However, what is described shall also be considered valid for containers constituted only of the outer skeleton.

In particular, this invention was devised with reference to the prior art type of containers whose outer skeleton is constituted of a paper and cardboard industry article, that is to say, a (paper, cardboard or paperboard) cellulose material-based article, which comprises a plurality of panels of material connected to each other, usually separated by fold lines, and which, starting from a spread out configuration in which they extend mainly in one plane, can be brought to a three-dimensional configuration corresponding to the shape of the outer skeleton to be formed, by means of suitable folding and connection of the various panels. In spite of that, this invention is not linked to the material of which the outer skeleton is constituted.

At present, prior art containers may be of various types.

In the first type, not of interest for this invention, the outer skeleton is constituted of a single sheet of cardboard or paperboard which extends continuously on the entire outer surface of the container. That sheet, before taking on the three-dimensional shape of the skeleton, has a central zone (intended to constitute the bottom wall of the skeleton, surrounded by a main annular portion of material, intended to constitute the lateral wall of the skeleton. During the step of folding the lateral wall upwards relative to the bottom wall, in the lateral wall itself wrinkled zones are created, suitable for compensating for the smaller extent of surface deriving from the folding. In many applications, the main annular portion is surrounded by a further secondary annular portion suitable for constituting a perimetric flange of the container, which extends outward starting from the upper edge of the lateral wall. Since the perimetric flange also extends in plan view less than the secondary annular portion, the wrinkled zones also continue on the annular flange.

For a second prior art type to which this invention may be applied, in contrast, the outer skeleton comprises a single sheet of material in which a main panel, and a plurality of secondary panels which extend outwards from the main panel are present. The main panel is the one which in the container is positioned at the bottom wall, whilst the secondary panels are those which in the container are positioned at the lateral wall. Depending on the embodiments, the secondary panels may or may not comprise outer projections 28 which, if present, are positioned at the upper perimetric flange of the container.

Unlike those of the first type described above, the skeletons of the second type do not usually have wrinkled zones, and a degree of continuity of the perimetric flange is obtained exclusively by attempting to bring the edges of the adjacent panels as close to each other as possible. Examples of containers which use outer skeletons of the second type are described in the following documents: US 3358900, US 3489331, US 4046310, FR 2406522, US 5253801, FR 2826938, FR 2933329, WO 2012/049005 and WO 2018/017783.

However, both of these prior art technologies have some important disadvantages.

In particular, in the case of containers intended to allow the packaging of food products in a controlled atmosphere, the inner thermoplastic material is such that it guarantees preservation of the protective atmosphere for the entire useful life of the food product and is intended to be coupled, once the product has been inserted in the container, to an upper protective film with similar features, which is sealed to the inner thermoplastic material. With both types of prior art containers described above, the sealing is usually performed at the perimetric flange, but may also extend on the rest of the free surface of the container (known as Skin packaging).

However, over the years it has been possible to ascertain that the two types of outer skeleton described above, although able to guarantee a degree of container mechanical stiffness, at the perimetric flange make operations for sealing the upper protective film very critical. In fact, at the wrinkled zones or the discontinuity zones of the skeleton respectively, the sealing may in many cases prove to be either ineffective (that is to say, small gaps for the passage of air remain) or in any case weak (that is to say, such as to yield easily as a result of handling by users).

In an attempt to overcome that disadvantage, further embodiments have been proposed, even to which this invention may be applied, which are characterised in that, at the perimetric flange, the skeleton comprises a continuous and flat annular portion.

In a first example of this type, described for example in patent application WO 2020/033350 A1, the outer skeleton is obtained from a single sheet of material folded on itself, and the lateral wall and the bottom wall are defined by wings of the skeleton which extend starting from the continuous annular portion (either inwards or towards the inside of it in the sheet in the spread out configuration).

A second example of containers in which the skeleton has a continuous flange is described for example in patent applications WO 2019/020863 A2 and WO 1999/067143 A2, in which the outer skeleton is constituted of a plurality of separate sheets, amongst which one defines the annular frame at the annular flange, and one defines the skeleton at the bottom wall. The various sheets are fixed to each other by means of an adhesive, to make the skeleton on which the layer of thermoplastic material is then thermoformed. A further type of containers in which the outer skeleton has a continuous flange is described in patent application WO 2022/264022 A1 by this same Applicant. In this case the outer skeleton is constituted of two separate sheets. A first sheet extends at both the entire bottom wall, and the entire lateral wall, whilst a second sheet extends at the annular flange and has a series of wings which are superposed on the first sheet at the lateral walls. The two sheets are fixed to each other directly by the layer of thermoplastic material thermoformed on them.

In all of these prior art solutions in which the outer skeleton has a continuous upper flange, the skeleton although extending at the entire lateral wall in that zone is not continuous but is constituted of a plurality of parts side by side. Although all of these prior art types of containers in which the skeleton has a continuous and flat portion at the annular flange provide a solution to the previous problems linked to sealing the end pack, they too are not free of disadvantages.

As is known, containers constituted of an outer skeleton and an inner coating which adheres to the outer skeleton, were devised and developed in order to use less plastic material than containers constituted exclusively of a thermoformed plastic material. This was both to reduce plastic consumption, instead using more recyclable materials (such as cellulose materials), and to reduce the costs of the containers.

Over the years containers were then gradually developed and marketed in which the thicknesses of the plastic material, as well as those of the paperboard used, were gradually reduced, guaranteeing a further saving, the performance being equal (in terms of protection of the product).

The continuous development of new containers using this technology recently led the Applicant to deal with the development of containers in which the production specifications set stricter mechanical strength requirements for the pack. In particular, some types of pack must be capable of withstanding an axial squeezing action without being ruined. That applies for example for some multi-sector containers and for some containers with a volume of between 50 and 150 ml.

Many tests carried out by the Applicant showed that the technologies currently used are unlikely to allow those requirements to be met, since the outer skeletons currently known do not guarantee enough mechanical strength, the consequence being, for example, frequent detachment of the inner coating as a result of an axial compression action.

In this context the technical purpose which forms the basis of this invention is to define a method and to make an apparatus for making an outer skeleton of a container of the type indicated above, which overcome the above-mentioned disadvantages.

In particular the technical purpose of this invention is to define a method and to make an apparatus for making a container which allow a mechanically stronger outer skeleton to be obtained.

The technical purpose specified and the aims indicated are substantially achieved by a method and by an apparatus for making a container as described in the appended independent claims. Particular embodiments of this invention are defined in the corresponding dependent claims.

Further features and the advantages of this invention will be more apparent in the detailed description of several preferred, non-limiting embodiments, of a method and of an apparatus for making a container illustrated in the accompanying drawings, in which:
- Figure 1 shows, in plan view and spread out, a first sheet usable for making an outer skeleton in accordance with a preferred embodiment of this invention;
- Figure 2 shows, in plan view and spread out, a second sheet usable for making an outer skeleton in accordance with the preferred embodiment of this invention;
- Figure 3 is a top view of the first sheet of Figure 1 in a folded configuration;
- Figure 4 is a top view of the second sheet of Figure 2 in a folded configuration and superposed on the first sheet of Figure 3 to form the outer skeleton;
- Figure 5 shows a container obtained by applying a layer of thermoformable plastic material to the outer skeleton of Figure 4;
- Figure 6 is a schematic vertical section of an apparatus in accordance with this invention during execution of an inserting step of the method according to this invention;
- Figure 7 is an enlarged view of the detail VII of Figure 6;
- Figure 8 is a schematic vertical section of a detail of an embodiment of an apparatus according to this invention which comprises a pressing element equipped with movable portions, with the pressing element in a retracted configuration;
- Figure 9 shows the detail of Figure 8 with the pressing element in an expanded configuration.

In the detailed description which follows first there will be a description of the method for making a skeleton of a container, which is the subject matter of a first aspect of this invention, and then a description of the apparatus for making the skeleton, which is the subject matter of a second aspect of this invention.

What is described below with reference, respectively, to the method and to the apparatus, shall be understood to also be applicable, respectively, with reference to the apparatus and with reference to the method, if technically compatible.

Hereinafter, with reference to the above-mentioned figures, the reference number 1 denotes in its entirety an apparatus according to this invention, whilst the reference number 2 denotes in its entirety a thermoformable film and the reference number 3 an outer skeleton. In some embodiments, the outer skeleton is intended to itself constitute the container; in other embodiments, the container comprises both the outer skeleton 3 and a thermoformable film 2 applied to the outer skeleton 3 (which adheres at least to an inner surface 4 of the outer skeleton 3).

This invention relates in general to a method, and an apparatus 1, for making the outer skeleton 3 to which a thermoformable film 2 must then be applied. The outer skeleton 3 comprises a bottom wall 5 and a lateral wall 6. The bottom wall 5 has a perimetric edge 7. The lateral wall 6 extends between a lower edge 8, connected to the perimetric edge 7, and an upper edge 9 which defines an upper opening 10. In some embodiments, advantageously, a perimetric flange 11 is connected to the lateral wall 6 at the upper edge 9 and extends outwards starting from the upper edge 9. The bottom wall 5 and the lateral wall 6 together define a compartment 12 which is intended, in use, to house the product.

The lateral wall 6 of the outer skeleton 3 extends in an annular way without gaps around the bottom wall 5. Depending on the embodiments, the lateral wall 6 may for example comprise a single curved surface (and therefore, for example, extends substantially like an inverted frustum of a cone), or it may comprise a plurality of faces. However, the lateral wall 6 may have one or more windows, for example made at the centre of the faces. Advantageously, the lateral wall 6 of the outer skeleton 3 overall has a flared shape widening from the lower edge 8 towards the upper edge 9.

This invention is not limited by the shape of the outer skeleton 3, or by the type of the outer skeleton 3, which may be coloured, transparent, with text, etc., nor by the material of which it is constituted. With regard to that, similarly to most prior art containers of this type, the outer skeleton 3 may advantageously be constituted of a paper and cardboard industry article, that is to say, a cellulose material-based article (such as paper or paperboard), or it may be constituted of different materials, for example of a plastic material-based article or of a metal material-based article (such as aluminium). Outer skeletons constituted of an article based on multiple different materials (such as, for example, cellulose material and plastic material) are also possible. This invention is also not limited by the type of thermoformable film 2 which may have to be applied to the outer skeleton 3, since it may be coloured, transparent, etc. Moreover, the thermoformable film 2 may be constituted of fossil-based plastics, bio-based plastics, natural plastics, biodegradable or compostable plastics, or mixtures thereof, or of a multi-layer material based on one or more of them.

In accordance with an innovative aspect of this invention, the lateral wall 6 of the outer skeleton 3 has at least one pair of superposed panels between which a heat-activatable glue 30 is present, and the method comprises an initial step, an inserting step and a pressing step.

However, advantageously, the lateral wall 6 of the outer skeleton 3 has a plurality of pairs of superposed panels between which a heat-activatable glue 30 is present; in some embodiments, two or more pairs of superposed panels may be superposed on each other and a panel may be simultaneously the lower panel in one pair and the upper panel in a pair underneath.

In some embodiments the heat-activatable glue 30 is deposited on at least one of the panels as a coating, during the making of the panel itself. In other embodiments, the heat-activatable glue 30 may in contrast be sprayed on one or both of the panels during forming/assembly of the outer skeleton 3. During the initial step the outer skeleton 3 is positioned inside a housing 24 defined by a supporting element 23, with the panels of the at least one pair of panels superposed on each other (with the heat-activatable glue 30 interposed between them) but detached from each other;

During the inserting step a pressing element 15 is inserted inside the compartment 12 defined by the outer skeleton.

During the pressing step the pressing element 15 and the supporting element 23 are pressed against each other at the at least one pair of superposed panels (or, preferably simultaneously, at the plurality of pairs of superposed panels present in the lateral wall), squeezing the pair (or pairs) of superposed panels.

During the initial step, the inserting step and the pressing step at least one of either the pressing element 15 or the supporting element 23 is kept at a temperature of between 50°C and 250°C, preferably between 50°C and 200°C, more preferably between 100°C and 200°C and even more preferably between 100°C and 150°C.

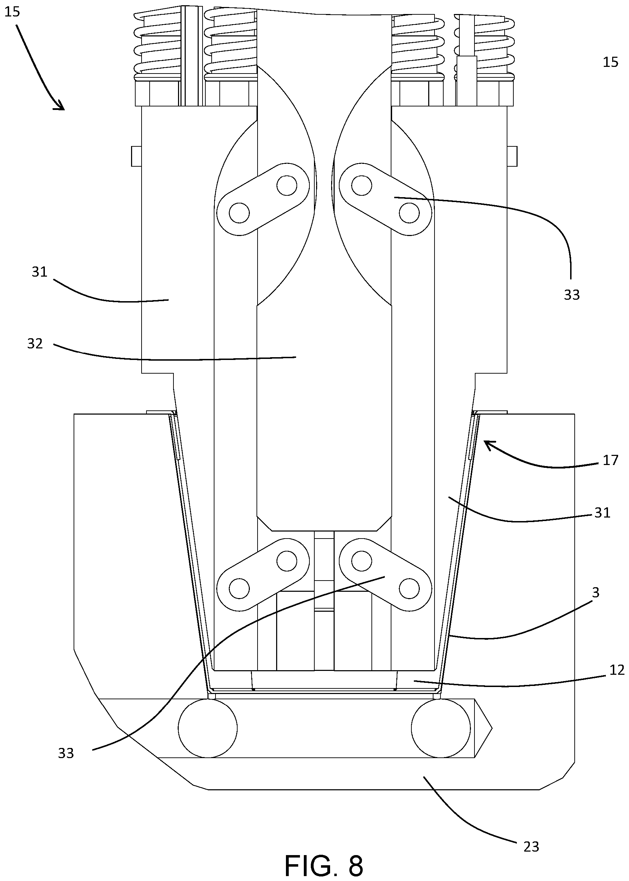

In this way, the squeezing of the pair of superposed panels causes activation of the heat-activatable glue 30 which in turn causes an adhesive coupling between the pair of panels. In accordance with this invention, the pressing step is carried out by expanding the pressing element 15 inside the compartment 12, radially relative to a central axis of the compartment 12. In more detail, the pressing element 15 is initially inserted in the compartment 12 in a retracted configuration in which it is spaced apart from the supporting element 23 and from the pair of panels on which it must act (Figure 8). Then, during the pressing step the pressing element 15 is switched from the retracted configuration to an expanded configuration in which it presses the at least one pair of superposed panels against the supporting element 23, squeezing them against each other. Any of the pressing elements 15 described below can be used for that purpose.

In some embodiments, the method also comprises a removing step, carried out after the inserting step, during which the pressing element 15 is removed from the compartment 12 and removal of the outer skeleton 3 from the housing 24 is allowed.

In some embodiments, during the inserting step, the pressing element 15 is used to press at least at the portion of the lateral wall 6 where the two panels are superposed (for example: the pressing element 15 is used to press at the lower portion, if the superposed panels between which the heat-activatable glue 30 is present are at the lower portion) or the entire lateral wall 6 is pressed.

The two panels may be superposed in various ways.

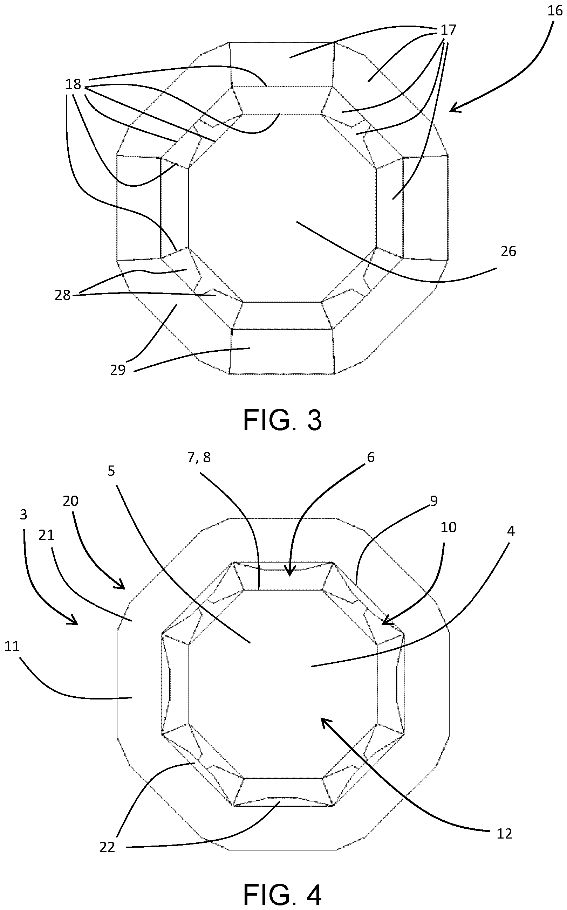

In some cases, the superposing of the panels is visible inside the outer skeleton 3 (that is to say, at the inner surface 4 - as in Figure 3); in contrast, in other cases, the superposing of the panels is visible on the outside of the outer skeleton 3 (solution not illustrated). In general the superposing will be visible on the side on which the smaller panel is located. In yet other cases, the superposing may be visible both on the inside and on the outside.

In some embodiments, before the inserting step, the method comprises a first pick-up step, in which a first sheet 16 comprising at least one first plurality of first panels 17, which is in a spread out configuration is picked up; and a first folding step in which the flat first sheet 16 is folded giving it the shape which it will have to have in the finished outer skeleton 3. The different first panels 17 are separated by fold lines 18.

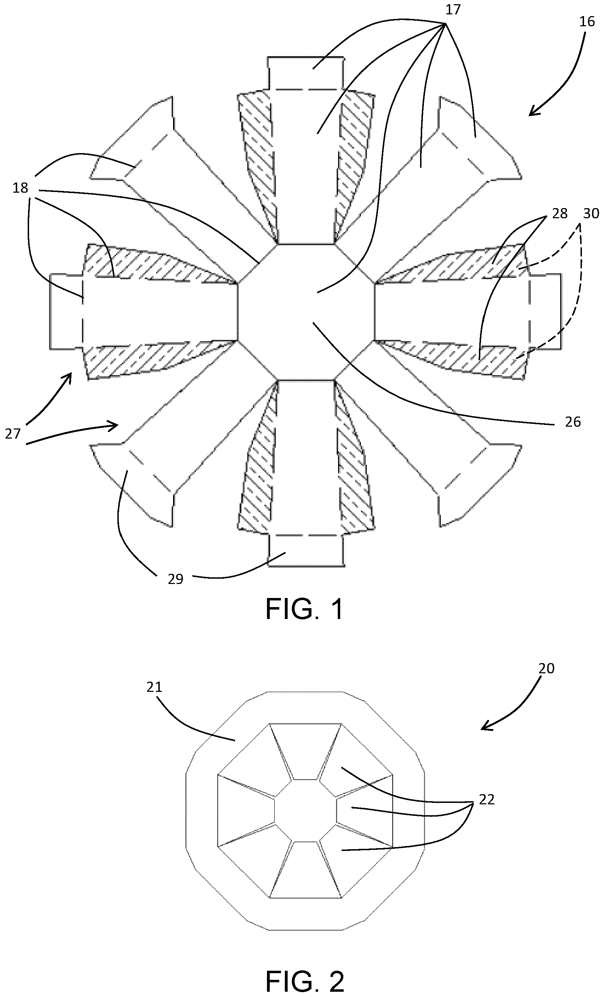

In some preferred embodiments, in which the outer skeleton 3 also comprises a perimetric flange 11 (connected to the lateral wall 6 at the upper edge 9 and which extends outwards starting from the upper edge 9), before the inserting step, the method also comprises a second pick-up step in which a second sheet 20 which has at least one continuous annular panel 21 is picked up, and a superposing step in which the second sheet 20 is at least partly superposed on the first sheet 16 to make the perimetric flange 11 using the continuous annular panel 21. Depending on the embodiments the superposing of the first sheet 16 on the second sheet 20 may occur at the perimetric flange 11 and/or at the lateral wall 6 (on the inner side or on the outer side of the outer skeleton 3). Advantageously, however, the continuous annular panel 21 is positioned in such a way as to define the entire upper surface of the perimetric flange 11. In some cases, the second sheet 20 also comprises a second plurality of second panels 22 which are connected to the continuous annular panel 21 (for example inside it as shown in Figure 2). Depending on the embodiments, when the second pick-up step and the superposing step are also used, the method may also comprise a second folding step (described below) to ensure that all of the panels which must be superposed are folded in the appropriate way.

The various second panels 22 are also preferably separated from the continuous annular panel 21 by fold lines 18.

The pairs of superposed panels operated on during the inserting step may be constituted entirely of only the first sheet 16, or entirely of only the second sheet 20, or of both the first sheet 16 and the second sheet 20.

In the embodiment illustrated in the accompanying Figures 1 and 2, during the first folding step at least two first panels 17 which are part of the first sheet 16 are superposed on each other, obtaining a pair of superposed panels. At least one of the first panels 17 which constitute that pair of superposed panels is provided with the heat-activatable glue 30, at its surface facing the other first panel. Depending on the applications the heat-activatable glue may be of any type, for example a heat-activatable paint.

In particular, in some preferred embodiments which include the embodiment of Figure 1, the first sheet 16 comprises a central first panel 26 configured to be part of the bottom wall 5, and a plurality of radial first panels 27 which extend radially outwards starting from the perimetric edge 7. In this case, advantageously, for each pair of adjacent radial first panels 27, one of the two radial first panels 27 has a lateral projection 28, configured to be superposed on the other radial first panel 27 (on the inner side or on the outer side of the outer skeleton 3) when the outer skeleton 3 is assembled. In particular, in Figure 1, along the polygonal perimetric edge 7 there are, one after another, alternating, four radial first panels 27 without projections 28, and four radial first panels 27 which have a projection 28 on each side (that is to say, which project transversally relative to the radial line of extension of the radial first panel 27). In Figure 1, the heat-activatable glue 30 is applied below the projections 28.

Advantageously, when the second sheet 20 comprises a second plurality of second panels 22 which are connected to the continuous annular panel 21, during the pick-up step it is in a spread out configuration. Therefore, the method also comprises a second folding step in which the flat second sheet 20 is folded.

In this case, the pair of superposed panels (or a further pair of superposed panels) may be obtained by carrying out the superposing step by superposing on each other at least one first panel 17 (of the first sheet 16) and one second panel 22 (of the second sheet 20). In this case, at least one of either the first panel 17 or the second panel 22 which constitute that pair of superposed panels is provided with the heat-activatable glue 30 on a surface of it facing the other panel. For example, the second panels 22 of Figure 2 may be equipped with the heat-activatable glue 30 on their lower side.

In some cases it is even possible that two pairs of superposed panels are completely or partly superposed on each other, if one pair is formed by two first panels 17 and the other by the coupling of one or more first panels 17 with a second panel 22.

In the embodiment illustrated in the accompanying figures, as well as in others not illustrated, it is also the case that, in the assembled outer skeleton 3, the perimetric flange 11 also comprises a group of first panels 29 separate from each other which extend cantilever-style from the lateral wall 6, and on which the continuous annular panel 21 is superposed. In particular, in the embodiment illustrated, the separate first panels 29 are fixed to the outermost part of the radial first panels 27.

In some embodiments it is also possible that the first panels 29 separate from each other and/or the continuous annular panel 21 are provided with the heat-activatable glue 30. In this case, during the inserting step, the pressing element 15 is also pressed on the perimetric flange 11 and activation of that heat-activatable glue 30 is caused; activation of that heat-activatable glue 30 causes adhesive coupling between the first panels 29 separate from each other and the continuous annular panel 21. For that purpose, the pressing element 15 may be equipped with a shoulder (not illustrated) configured to abut against the perimetric flange 11 when the pressing element 15 also abuts against the lateral wall 6.

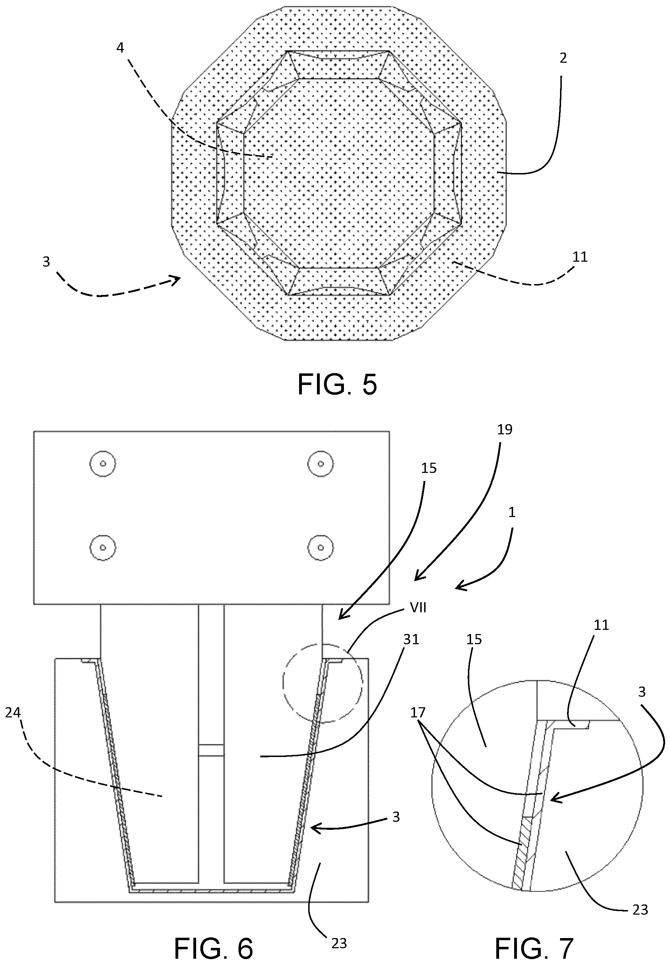

This invention also relates to a method for making a container 25 in which, first of all, an outer skeleton 3 is made using the method described so far (an outer skeleton 3 made in this way is visible in Figure 4) and, then, a thermoforming step is carried out, during which a heated thermoformable film 2 is thermoformed on an inner surface 4 of the outer skeleton 3. The end result is visible in Figure 5.

Similarly to what is commonly known, in order to thermoform the thermoformable film 2 on the outer skeleton 3 the invention may comprise a heating step, during which the thermoformable film 2 is heated, and a thermoforming step, during which the heated thermoformable film 2 is thermoformed on the inner surface 4 of the outer skeleton 3.

As is known, advantageously the thermoforming step can be carried out by creating the vacuum inside a seat in which the outer skeleton 3 was previously inserted, between the outer skeleton 3 and the thermoformable film 2. In particular, once the outer skeleton 3 has been inserted in the seat, a positioning step will take place, during which the thermoformable film 2 is positioned above the outer skeleton 3 placed in the seat, and a closing step, during which the top of the seat is closed with a closing surface (keeping the thermoformable film 2 interposed between the closing surface and the outer skeleton 3).

It should be emphasised that this invention may be applied if the thermoformable film 2 is already in sheets, and advantageously there is thermoforming of the entire sheet without waste material, or if the thermoformable film 2 is fed from a reel and is subsequently cut into sheets (with or without waste).

During the thermoforming, by creating the vacuum in the seat, the thermoformable film 2 is deformed and shaped on the inner surface 4 of the outer skeleton 3.

Since the aspects strictly linked to thermoforming are known to a person expert in the sector, they will not be described in further detail hereinafter.

There now follows a description of the apparatus 1 according to this invention for making an outer skeleton 3. That apparatus 1 may advantageously be used to carry out the method for making a container according to this invention.

As is schematically illustrated in Figure 6, the apparatus 1 comprises a pressing device 19 which in turn comprises the supporting element 23, which defines a housing 24 for housing the outer skeleton 3 (initially with the at least one pair of supporting panels detached from each other), and the pressing element 15, which is movable relative to the supporting element 23.

The pressing element 15 is movable relative to the supporting element 23 between a non-operating position and an operating position. When the pressing element 15 is in the non-operating position, the pressing element 15 is spaced apart from the supporting element 23. When, in contrast, the pressing element 15 is in the operating position, the pressing element 15 is inserted in the housing 24 so that it is inserted, in use, in the compartment 12 of the outer skeleton 3. The pressing element 15, when it is in the operating position, is also switchable between a retracted configuration in which it is spaced apart from the supporting element 23 and an expanded configuration in which it is configured to press, in use, the at least one pair of superposed panels against the supporting element 23, squeezing them against each other (so as to activate the heat-activatable glue 30 and glue them to each other) when it is in the operating position.

In fact, at least one of either the pressing element 15 or the supporting element 23 is heated and is configured to adopt, in use, a temperature of between 50°C and 250°C, preferably between 50°C and 200°C, even more preferably between 100°C and 200°C and even more preferably between 100°C and 150°C.

For that purpose, advantageously, the pressing element 15 and/or the supporting element 23 are internally equipped with suitable heating means, similar to those commonly used in apparatuses 1 of this type. In some cases, the heating means comprise electric heating elements associated with temperature sensors. In other cases, the heating means have a plurality of ducts, obtained inside the pressing element 15 and/or the supporting element, in which a hot fluid flows (such as, for example, hot water or hot air) to heat, respectively, the pressing element 15 and/or the supporting element 23.

In the preferred embodiments, the pressing element 15 is at least partly shaped to match the compartment 12 of the outer skeleton 3 (at least when it is in the operating position - Figure 6), in particular at the zones of the compartment 12 at which it must act by pressing. Advantageously, in some embodiments the pressing element 15 is shaped to match the entire compartment 12 of the outer skeleton 3 (Figure 6).

In some embodiments, the pressing element 15 comprises movable portions 31 which are switchable between a separating configuration, in which they are spaced apart from the supporting element 23 so that, in use, they are spaced apart from the lateral wall 6 (configuration which they adopt when the pressing element 15 is in the retracted configuration), and a contact configuration, in which they are shifted radially outwards compared with when they are in the separating configuration and in which, in use, they are in contact with the lateral wall 6 of the outer skeleton 3 to press the one or more pairs of superposed panels against the supporting element 23 (configuration which they adopt when the pressing element 15 is in the expanded configuration). In those embodiments the pressing element 15 is advantageously laterally expandable (perpendicularly to the line along which it is inserted in the compartment 12).

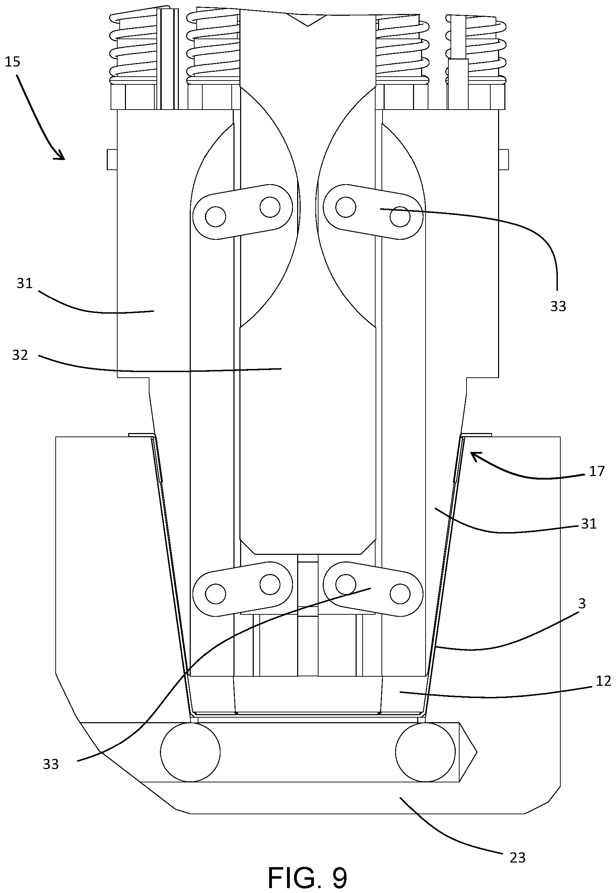

An example of an embodiment in which the pressing element 15 comprises movable portions 31 is illustrated in Figures 8 and 9 which show the pressing element 15, respectively, in the retracted configuration and in the expanded configuration. In this embodiment, each movable portion 31 is fixed to a central support 32 of the pressing element 15 by means of a four-bar linkage connection 33 and the movement of the movable portions 31 is obtained by lifting the movable portions 31 while keeping the central support 32 still (passage from Figure 8 to Figure 9).

It should be noticed that Figures 8 and 9 (schematically) show the supporting element 23 and the pressing element 15 in a vertical central section in which only two movable portions 31 are visible. However, advantageously, there may be as many movable portions 31 as there are faces at which there are pairs of superposed panels present; for example, there may be four movable portions 31 and they may be movable in pairs in two vertical planes perpendicular to each other.

Depending on the embodiments, the movable portions 31 of the pressing element 15 or, more generally, their parts intended to make contact with the outer skeleton 3 may be made of any material suitable for the purpose, for example metal material, metal alloys or more or less compressible elastomeric material (mounted on a rigid support).

In other embodiments not illustrated, in contrast, the pressing element 15 comprises an inflatable body or an expandable body and the apparatus also comprises a feeding device connected to the inflatable body or to the expandable body for feeding to, and removing from, the inflatable body or the expandable body a working fluid (for example water, oil, air, or an inert gas) for, respectively, inflating it and deflating it or expanding it and retracting it. The pressing element 15 is in the extended configuration when the inflatable body is inflated or the expandable body is expanded (therefore filled with working fluid) and in the retracted configuration when the inflatable body is deflated or the expandable body is retracted (therefore emptied of working fluid).

This invention brings important advantages.

In fact, thanks to this invention it was possible to define a method and an apparatus which allow an outer skeleton of a container to be made which is mechanically stronger than the prior art skeletons. In particular, it was in fact possible to define a method and an apparatus which allow the making of packs capable of withstanding without being ruined an axial squeezing action as required by several standards in the sector.

Finally, it should be noticed that this invention is relatively easy to produce and that even the cost linked to implementing the invention is not very high. The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. A method for making an outer skeleton (3) for a container (25), wherein the container comprises the outer skeleton (3) or is constituted of the outer skeleton (3), and wherein the outer skeleton (3) comprises a bottom wall (5), which has a perimetric edge (7), and a lateral wall (6), which extends between a lower edge (8), connected to the perimetric edge (7), and an upper edge (9) which defines an upper opening (10), the bottom wall (5) and the lateral wall (6) together defining a compartment (12), and wherein the lateral wall (6) has at least one pair of superposed panels between which a heat-activatable glue (30) is present;
the method comprising an initial step, an inserting step and a pressing step, and wherein:
during the initial step the outer skeleton (3) is positioned inside a housing (24) defined by a supporting element (23), with the at least one pair of superposed panels detached from each other;
during the inserting step a pressing element (15) is inserted inside the compartment (12);
during the pressing step the pressing element (15) and the supporting element (23) are pressed against each other at the at least one pair of superposed panels, squeezing the at least one pair of superposed panels;
during the initial step, the inserting step and the pressing step the pressing element (15) and/or the supporting element (23) is kept at a temperature of between 50°C and 250°C, preferably between 50°C and 200°C, more preferably between 100°C and 200°C and even more preferably between 100°C and 150°C.
the pressing step is carried out by expanding the pressing element (15) inside the compartment (12), radially relative to a central axis of the compartment (12);
and wherein, during the pressing step, the squeezing of the pair of superposed panels causes activation of the heat-activatable glue (30) which in turn causes an adhesive coupling between the pair of panels.

2. The method according to claim 1, comprising, before the inserting step:
a first pick-up step in which a first sheet (16) comprising at least one first plurality of first panels (17), which is in a spread out configuration is picked up; and
a first folding step in which the flat first sheet (16) is folded.

3. The method according to claim 2, wherein during the first folding step at least two first panels (17) are superposed on each other obtaining said at least one pair of superposed panels, and wherein at least one of the first panels (17) which constitute that pair of superposed panels is provided with said heat-activatable glue (30) on a surface of it facing the other panel.

4. The method according to claim 3, wherein the first sheet (16) comprises a central first panel (26) configured to be part of the bottom wall (5), and a plurality of radial first panels (27) which extend radially outwards starting from the perimetric edge (7), and wherein, for each pair of adjacent radial first panels (27) one of the two radial first panels (27) has a lateral projection (28), configured to be superposed on the other radial first panel (17) when the outer skeleton is assembled.

5. The method according to claim 2, 3 or 4, wherein the outer skeleton (3) also comprises a perimetric flange (11) which is connected to the lateral wall (6) at the upper edge (9) and which extends outwards starting from the upper edge (9), and wherein, before the inserting step, the method also comprises:
a second pick-up step in which a second sheet (20) which has a continuous annular panel (21) is picked up; and
a superposing step in which the second sheet (20) is at least partly superposed on the first sheet (16) to make the perimetric flange using the continuous annular panel (21).

6. The method according to claim 5, wherein:
the second sheet (20) comprises a second plurality of second panels (22) which are connected to the continuous annular panel (21) and during the pick-up step is in a spread out configuration;
the method also comprises a second folding step in which the flat second sheet (20) is folded;
wherein during the superposing step at least one first panel (17) and one second panel (22) are superposed on each other, obtaining at least one pair of superposed panels;
and wherein at least one of either the first panel (17) or the second panel (22) which constitute that pair of superposed panels is provided with said heat-activatable glue (30) on a surface of it facing the other panel.

7. The method according to claim 4 or 5 wherein in the assembled outer skeleton (3) the perimetric flange (11) comprises a group of first panels (29) separate from each other which extend cantilever-style from the lateral wall (6) and on which the continuous annular panel (21) is superposed.

8. The method according to claim 7, wherein, moreover, the first panels (29) separate from each other and/or the continuous annular panel (21) are also provided with said heat-activatable glue (30) and wherein, during the inserting step, the pressing element (15) is also pressed on the perimetric flange (11) and activation of that heat-activatable glue (30) is caused, and wherein activation of that heat-activatable glue (30) causes an adhesive coupling between the first panels (29) separate from each other and the continuous annular panel (21).

9. A method for making a container (25) wherein, in order:
an outer skeleton is made using the method according to any one of claims 1 to 8; and
a thermoforming step is carried out, during which a heated thermoformable film (2) is thermoformed on an inner surface (4) of the outer skeleton (3).

10. An apparatus for making an outer skeleton (3) of a container, wherein the container comprises the outer skeleton (3) or is constituted of the outer skeleton (3), and the outer skeleton (3) comprises a bottom wall (5), which has a perimetric edge (7), and at least one lateral wall (6), which extends between a lower edge (8), connected to the perimetric edge (7), and an upper edge (9) which defines an upper opening (10), the bottom wall (5) and the at least one lateral wall (6) together defining a compartment (12), and wherein the lateral wall (6) has at least one pair of superposed panels between which a heat-activatable glue (30) is present;
the apparatus (1) comprising a pressing device (19) which comprises a supporting element (23) which defines a housing (24) for housing, in use, the outer skeleton (3), with the at least one pair of superposed panels detached from each other, and a pressing element (15), which is movable relative to the supporting element (23) between a non-operating position, in which the pressing element (15) is spaced apart from the supporting element (23), and an operating position, in which the pressing element (15) is inserted in the housing (24) so that it is inserted, in use, in the compartment (12) of the outer skeleton (3), wherein, moreover:
at least one of either the pressing element (15) or the supporting element (23) is heated and is configured to adopt, in use, a temperature of between 50°C and 250°C, preferably between 50°C and 200°C, even more preferably between 100°C and 200°C and even more preferably between 100°C and 150°C;
the pressing element (15), when it is in the operating position, is switchable between a retracted configuration in which it is spaced apart from the supporting element (23) and an expanded configuration in which it is configured to press, in use, the at least one pair of superposed panels against the supporting element (23), squeezing them against each other.

11. The apparatus according to claim 10, wherein the pressing element (15) comprises a plurality of movable portions (31) which are switchable between a separating configuration, which they adopt when the pressing element (15) is in the retracted configuration and in which they are spaced apart from the supporting element (23), and a contact configuration which they adopt when the pressing element (15) is in the expanded configuration and in which they are shifted radially outwards compared with when they are in the separating configuration, for pressing, in use, the one or more pairs of superposed panels against the supporting element (23).

12. The apparatus according to claim 10 or 11, wherein the pressing element (15) is at least partly shaped to match the compartment (12) of the outer skeleton (3), at least when it is in the operating position.

13. The apparatus according to claim 10, wherein the pressing element (15) comprises, respectively, an inflatable body or an expandable body and wherein the apparatus also comprises a feeding device connected, respectively, to the inflatable body or to the expandable body for feeding to, and removing from, respectively, the inflatable body or the expandable body a working fluid for, respectively, inflating it and deflating it or expanding it and retracting it and thereby causing the switching of the pressing element (15) between the retracted configuration and the expanded configuration.
